# EUROPEAN PATENT APPLICATION

(11) **EP 1 887 485 A2**
(43) Date of publication of application: **13.02.2008**
(21) Application number: 07252992.8
(22) Date of filing: 30.07.2007
(51) Int. Cl.: G06F 17/30

(54) **Keyword outputting apparatus, keyword outputting method, and keyword outputting computer program product**

(30) Priority: 03.08.2006 JP 2006211686
(71) Applicant: Kabushiki Kaisha Toshiba, Minato-ku, Tokyo 105-8001 (JP)
(72) Inventor: Okamoto, Masayuki, Tokyo 105-8001 (JP); Yamasaki, Tomohiro, Tokyo 105-8001 (JP); Gotoh, Kazuyuki, Tokyo 105-8001 (JP); Umeki, Hideo, Tokyo 105-8001 (JP)
(74) Representative: Maury, Richard Philip

(57) **Abstract**

A keyword outputting apparatus includes a document receiving unit (11) that receives documents in a specific time period. A keywords analyzing unit (12) analyzes the documents for possible keywords. A keyword extracting unit (13) calculates a score for each keyword and extracts the keywords in order of the score. A keyword-structure generating unit (14) generates a keyword structure by classifying and stratifying each extracted keyword. A keyword outputting unit (17) outputs the keywords in descending order of the score based on the keyword structure.

## Description

### CROSS-REFERENCE TO RELATED APPLICATIONS

This application is based upon and claims the benefit of priority from the prior Japanese Patent Application No. 2006-211686, filed on Aug. 3, 2006; the entire contents of which are incorporated herein by reference.

### BACKGROUND OF THE INVENTION

### 1. Field of the Invention

The present invention relates to an apparatus, a method, and a computer program product for outputting a keyword.

### 2. Description of the Related Art

There has always been a great demand to know the talked-about or popular topics. Various technologies have been developed to cater to such demand. Among them, a technology to extract topical keywords from a document is drawing a lot of attention. A prominent application of such technology is the web-based search engines that enable a real-time search of wide-ranging information around the world by using search keywords.

Another technology provides ranking information of keywords searched over the web so that the topics in a specific time period can be obtained. In the technology, the ranking information is created based on the frequency of occurrence of the keywords in a specific time period, or common keywords from recently updated search engines, such as web-log search engines, are output as potential topics.

For example, JP-A 2006-139717 (KOKAI) discloses a keyword extracting method that aims at extracting recent topics from an electronic bulletin board system based on the frequency of posted messages regarding those topics.

There is a website (URL: http://kizasi.jp/) that provides the most talked-about current keywords, based on the frequency of keywords posted in web-logs. A web-log is a website where a user can freely post diaries or articles. Such keywords form a part of the keywords representing the topics.

The above website provides ranking information of the keywords of topics for a predetermined period such as 24 hours, one week, or one month. The website also provides the keywords that appear frequently in a specific time period regarding a particular topic and other keywords associated with the frequently appearing keyword.

However, the above website fails to display the keywords in order of high topicality due to which a user is not able to easily understand developments regarding a particular topic. For example, consider a keyword "XXX assault case" associated with particular topical news. Other keywords associated with that keyword could be "occurrence of incident", "fugitive warrant", and "arresting the criminal". However, the website fails to display those keywords in order of high topicality or in an easy-to-understand manner.

### SUMMARY OF THE INVENTION

According to an aspect of the present invention, there is provided a keyword outputting apparatus that includes a document receiving unit configured to receive a document having a date-time attribute that is in a specific time period; a keyword extracting unit that analyzes the document and extracts topical keywords from the document; a ranking determining unit that determines a ranking of each of the keywords based on attributes on these keywords; a keyword-structure generating unit that generates a keyword structure by classifying and stratifying the keywords based on cooccurrence of keywords; and a keyword outputting unit that outputs the keywords in descending order of the ranking that is determined by the ranking determining unit.

According to another aspect of the present invention, there is provided a method of outputting keywords that includes receiving a document having a date-time attribute that is in a specific time period;analyzing the document and extracting topical keywords from the document; determining a ranking of each of the keywords based on attributes on these keywords; generating a keyword structure by classifying and stratifying the keywords based on cooccurrence of keywords; and outputting the keywords in descending order of the ranking.

According to still another aspect of the present invention, there is provided a computer program product including a computer-readable recording medium that stores therein a plurality of commands that cause a computer to implement the above method of outputting keywords.

### BRIEF DESCRIPTION OF THE DRAWINGS

Fig. 1 is a schematic diagram of a system according to an embodiment of the present invention;
Fig. 2 is a schematic diagram for explaining a module configuration of a server shown in Fig. 1;
Fig. 3 is a block diagram of the server shown in Fig. 1;
Fig. 4A is a schematic diagram for explaining a display of a news article on a webpage;
Fig. 4B is a schematic diagram for explaining information on an electronic program guide (EPG);
Fig. 5 is a flowchart of a process performed by a keyword extracting processor shown in Fig. 3;
Fig. 6 is a schematic diagram of a structure of a set of topical keywords;
Fig. 7 is a flowchart of a process of structuring the topical keywords;
Fig. 8 is a schematic diagram of an example of a keyword structure;
Fig. 9 is a schematic diagram of an example of displaying the topical keywords; and
Fig. 10 is a schematic diagram of another example of displaying the topical keywords.

### DETAILED DESCRIPTION OF THE INVENTION

Exemplary embodiments of the present invention are described in detail below with reference to the accompanying drawings.

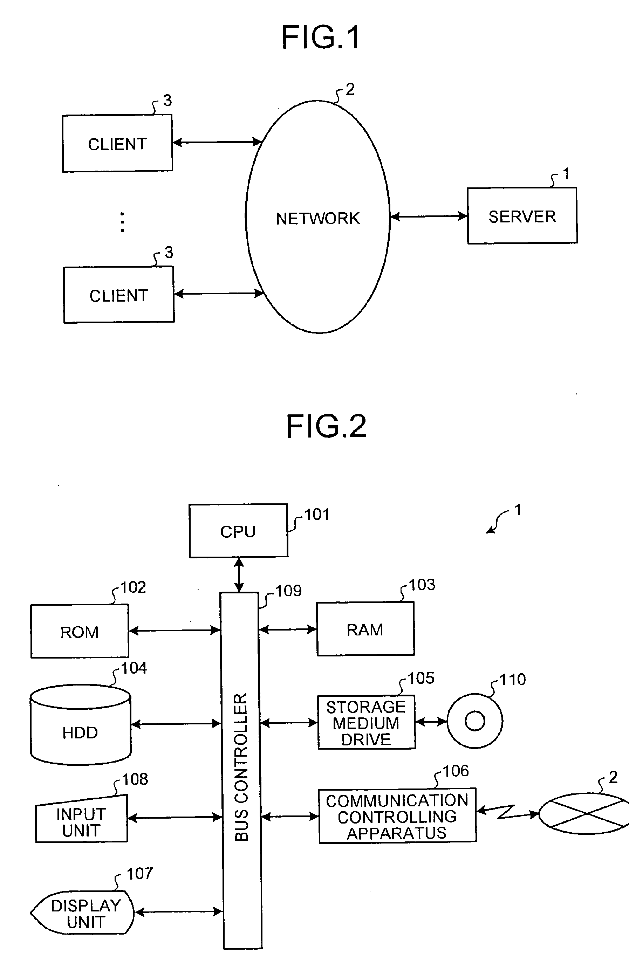

Fig. 1 is a schematic diagram of a server-client system that includes a keyword outputting apparatus according to an embodiment of the present invention. The server-client system includes a server computer (hereinafter, "server") 1 that functions as the keyword outputting apparatus. The server 1 is connected to one or more client computers (hereinafter, "client") 3 through a network 2 such as a local are network (LAN). The server 1 and the client 3 can be general-purpose personal computers.

Fig. 2 is a schematic diagram for explaining a module configuration of the server 1. The server 1 includes a central processing unit (CPU) 101 for information processing, a read only memory (ROM) 102 with basic input output system (BIOS) information, a data-rewritable random access memory (RAM) 103, a hard disk drive (HDD) 104 that functions as a database and stores therein various computer programs, a storage medium drive 105 such as a CD-ROM drive that is used for writing information in and/or reading information from a storage medium 110, a communication controlling apparatus 106 capable of communicating with outside computers through the network 2 thereby receiving information from and/or transmits information to outside, a display unit 107 such as a cathode ray tube (CRT) or a liquid crystal display (LCD) that displays information such as progress of processing or results to an operator, and an input unit 108 such as a keyboard or a mouse used by an operator to give commands or information to the CPU 101. A bus controller 109 arbitrates all data that is transmitted between the components of the server 1.

When a user switches ON the server 1 and the client 3, the CPU 101 runs a loader routine present in the ROM 102 that causes an operating system (OS), which is a computer program to manage the hardware and software of the computer, to be loaded into the RAM 103 from the HDD 104, and runs the OS. The OS runs various computer programs, reads information, and saves information as per user requirements. A typical example of an OS is Windows (registered trademark). The computer programs that run on such OS are called application programs. The application programs can also be computer programs that make the OS perform a part of operations described later or can be included in a set of computer program files meant for a predetermined application software or OS.

A keyword outputting program is stored in the HDD 104 as an application program. Hence, the HDD 104 functions as a storage medium for the keyword outputting program.

Generally, the application programs installed in the HDD 104 can also be stored in the storage medium 110 and vice versa. The storage medium 110 can be optical disks such as CD-ROM or DVD, magnetic optical disks, magnetic disks such as flexible disks (FD), and other media such as semiconductor memories. Thus, the portable storage medium 110 can also function as a storage medium for storing the application programs. The application programs can also be imported from outside computers through the communication controlling apparatus 106 and then installed in the HDD 104.

When the keyword outputting program is executed in the OS, the CPU 101 performs various processes and integrally controls each component of the server 1. Characteristic processes in the present embodiment performed by the CPU 101 are described below.

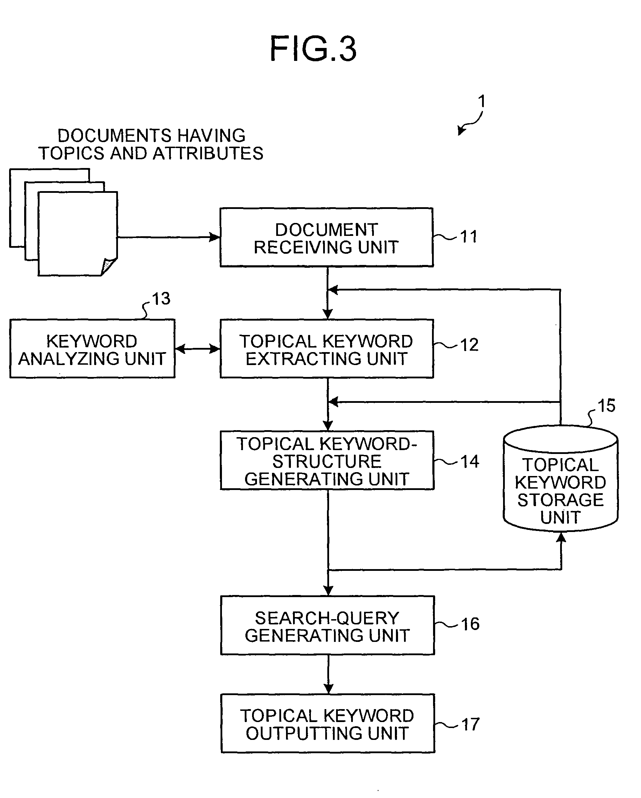

Fig. 3 is a block diagram of a framework of the server 1. The server 1 includes a document receiving unit 11, a topical keyword extracting unit 12, a keyword analyzing unit 13, a topical keyword-structure generating unit 14, a topical keyword storage unit 15, a search-query generating unit 16, and a topical keyword outputting unit 17. Those units of the server 1 can be implemented by executing the keyword outputting program.

Any common storage medium such as the HDD 104, the storage medium 110, and the RAM 103 can function as the topical keyword storage unit 15.

The function of each unit of the keyword outputting program is described below. The data structure or the flow of processing of each unit is described as and when required.

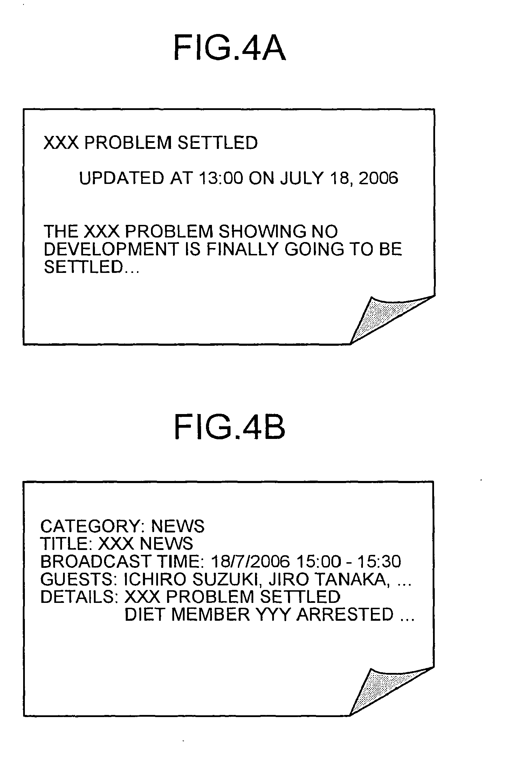

The document receiving unit 11 receives a collection of documents for a specific number of days. Each document has a date-time attribute. Examples of documents with a date-time attribute include a news article on a webpage (refer to Fig. 4A) or information on an EPG (refer to Fig. 4B). It is necessary for the document to have a date-time attribute such as the time of posting body text or time of refreshing body text. A specific website or a database can be specified as source from where the documents are received. Each document such as a news article on the webpage or information on the EPG has a unique identifiable document ID.

The topical keyword extracting unit 12 acquires the documents from the document receiving unit 11 and hands the documents over to the keyword analyzing unit 13. The keyword analyzing unit 13 analyses the documents for possible keywords within it.

That is, the keyword analyzing unit 13 analyzes the document for possible characteristic keywords within the document, which can be the text of a webpage or an EPG, by using existing natural language processing technology such as morphological analysis or n-gram extraction. For example, morphological analysis of the string "natural language processing" results in a break down of the string into single words such as "natural", "language", and "processing", each of which is treated as a keyword.

The keyword analyzing unit 13 returns a set of the keywords to the topical keyword extracting unit 12. The topical keyword extracting unit 12 determines from that set keywords with high topicality (hereinafter, "topical keywords") at a specified date and time and extracts those topical keywords.

The topical keyword-structure generating unit 14 checks co-occurrence or interrelation among the topical keywords extracted by the topical keyword extracting unit 12 and creates a topical keyword structure by stratifying and classifying the topical keywords based on the co-occurrence or interrelation.

The topical keyword storage unit 15 stores therein the topical keywords and the topical keyword structure. The topical keywords and the topical keyword structure stored in the topical keyword storage unit 15 are referred for further operations.

Based on the topical keywords and the topical keyword structure, the search-query generating unit 16 generates a webpage with embedded search queries to enable keyword search in a web-based search engine.

Upon receiving a request to display the webpage from the client 3 through the network 2, the topical keyword outputting unit 17 outputs (sends/transmits) the webpage generated by the search-query generating unit 16 to that particular client 3.

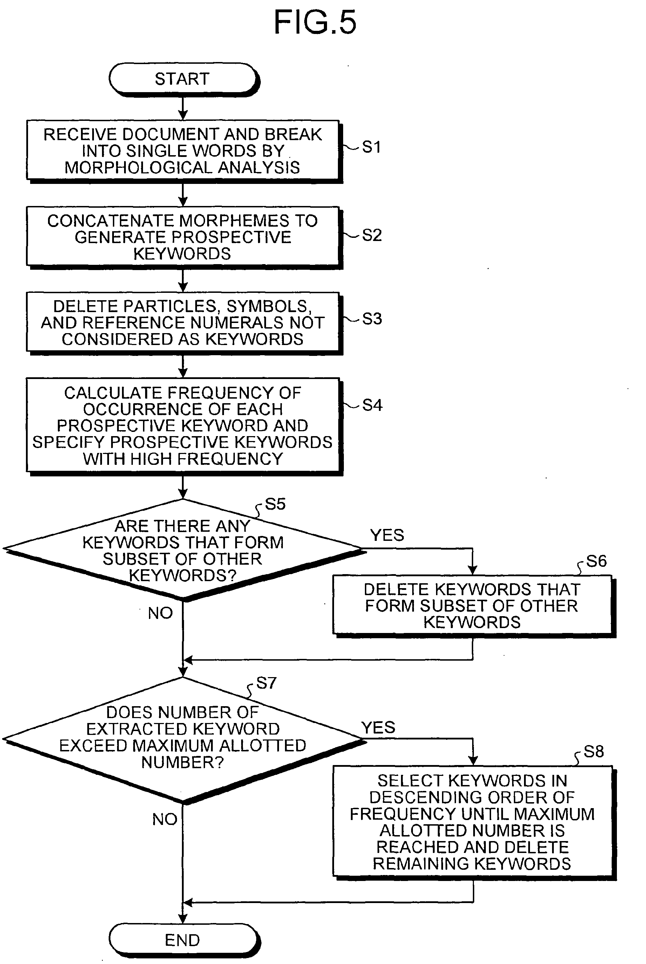

Fig. 5 is a flowchart of the keyword extraction procedure performed by the topical keyword extracting unit 12 and the keyword analyzing unit 13. The keyword extraction procedure is in reality performed by the CPU 101 because of execution of the keyword outputting program.

First, the keyword analyzing unit 13 performs morphological analysis on the documents, which are received by the document receiving unit 11 in a specific time period, and breaks down the documents into a plurality of singe word morphemes (step S1). The keyword analyzing unit 13 concatenates a plurality of the morphemes thereby generating prospective keywords having two or more words (step S2). The keyword analyzing unit 13 deletes from the prospective keywords particles, symbols, and reference numerals that cannot be considered as keywords (step S3). The keyword analyzing unit 13 returns the list of the prospective keywords to the topical keyword extracting unit 12.

The topical keyword extracting unit 12 calculates frequency of occurrence of each of the prospective keywords and arranges the prospective keywords in descending order of the frequency of occurrence as prospective topical keywords (step S4). The topical keyword extracting unit 12 determines whether there are any prospective topical keywords that form a subset of other prospective topical keywords. In other words, the topical keyword extracting unit 12 determines whether there is inclusion relation among the prospective topical keywords (step S5).

While calculating the frequency of occurrence of the keywords, the topical keyword extracting unit 12 also takes into account history of the frequency of occurrence of the keywords in addition to the current frequency of occurrence of the keywords. Information of the history is stored in the topical keyword storage unit 15 in association with the corresponding keywords.

The topical keyword extracting unit 12 is configured to calculate a score for each keyword in the collection of documents based on the frequency of occurrence of the keyword, which is one of the attributes of a keyword. However, other criteria can be considered for calculating the score. The criteria for calculating the score can be other attributes of a keyword in the collection of documents such as newness of the keyword, length of the keyword, or morphological information of the keyword.

When there is inclusion relation among the keywords (Yes at step S5), the topical keyword extracting unit 12 deletes the keywords that form a subset of other keywords (step S6). For example, consider keywords "XXX problem", "XXX", and "problem". The keyword "XXX problem" is in inclusion relation with the keywords "XXX", and "problem". That is, both the keywords "XXX" and "problem" form a subset of the keyword "XXX problem". In this example, the topical keyword extracting unit 12 deletes the keywords "XXX", and "problem".

Various approaches can be considered if there is inclusion relation among keywords. When there is inclusion relation among keywords, the topical keyword extracting unit 12 can be configured to, for example, combine the corresponding keywords, instead of deleting the keywords. For example, consider keywords "fake earthquake resistance" and "scam of earthquake resistance" that have overlapping words. The topical keyword extracting unit 12 can be configured to combine those two keywords to form a new keyword as "scam of fake earthquake resistance" and calculate the frequency of occurrence of the new keyword by adding the frequencies of occurrences of the original keywords.

Thus, the topical keyword extracting unit 12 first checks for the inclusion relation among the keywords, which are received from the keyword analyzing unit 13, and creates new keywords depending on the inclusion relation. The keywords obtained in this manner form a set of topical keywords.

On the other hand, if there is no inclusion relation among the keywords (No at step S5), the topical keyword extracting unit 12 determines whether the number of the topical keywords exceeds a maximum allotted number set beforehand (step S7).

If the number exceeds the maximum allotted number (Yes at step S7), the topical keyword extracting unit 12 selects the topical keywords in descending order of the frequency of occurrence until the maximum allotted number is reached, and deletes the remaining topical keywords (step S8).

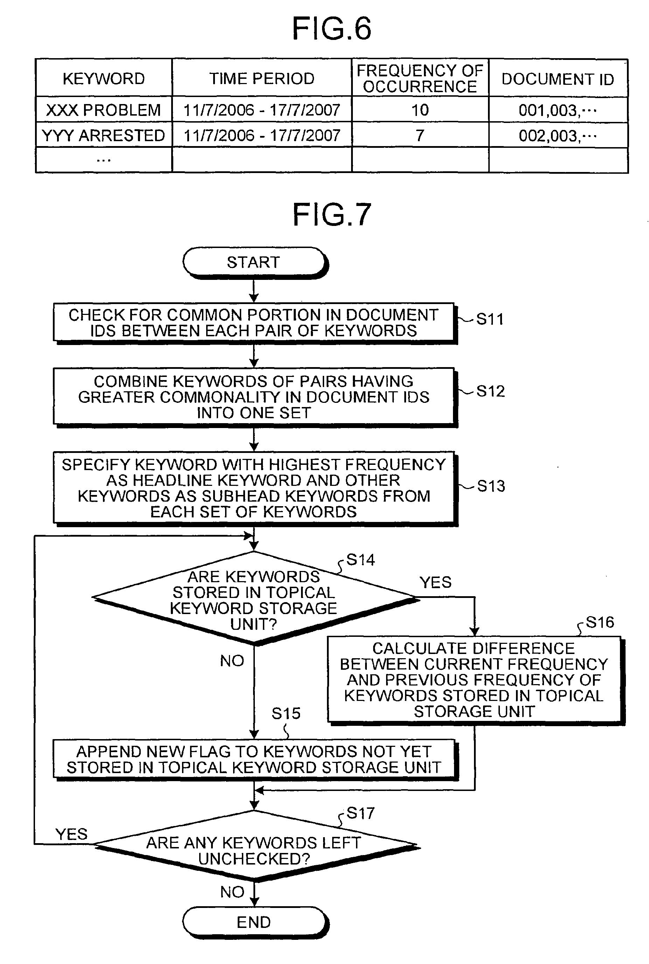

Fig. 6 is a schematic diagram of a structure of the set of extracted topical keywords. Attributes for each topical keyword include the string of the topical keyword, the time period set for the topical keyword, the frequency of occurrence of the topical keyword, and the document ID of the original document from which the topical keyword is extracted.

A process of structuring the topical keywords performed by the topical keyword-structure generating unit 14 is explained below. Fig. 7 is a flowchart of the process of structuring the topical keywords.

The topical keyword-structure generating unit 14 generates pairs(set?) of topical keywords and then checks for common portion in the document IDs of the keywords between each pair (step S11). For example, the document IDs of two keywords "XXX problem" and "YYY arrested" shown in Fig. 6 have "003" common in them.

The topical keyword-structure generating unit 14 combines pairs of keywords having greater commonality in the document IDs to form a bigger set of keywords (step S12). For example, if the document IDs of a pair of keywords (A, B) and a pair of keywords (A, C) have greater commonality, then the topical keyword-structure generating unit 14 combines the pairs to form a set of keywords {A, B, C}.

For each set of keywords, the topical keyword-structure generating unit 14 picks a keyword with the highest frequency of occurrence, specifies that keyword as a headline keyword, and specifies all other keywords in the corresponding set as subhead keywords (step S13). The headline keyword and the subhead keywords are displayed in a distinguishable manner on the client 3 as described later.

In this way, the topical keyword-structure generating unit 14 makes use of co-occurrence of the topical keywords that is caused by commonality between the documents of the topical keywords to classify and stratify the topical keywords.

The topical keyword-structure generating unit 14 then determines whether the same keyword has already been stored in the topical keyword storage unit 15 (step S14). If the keyword is not yet stored in the topical keyword storage unit 15 (No at step S14), it means that the keyword is a new keyword, so that the topical keyword-structure generating unit 14 appends a "New" flag to the keyword (step S15). When the keyword is already stored in the topical keyword storage unit 15 (Yes at Step S14), the topical keyword-structure generating unit 14 calculates difference between the frequencies of occurrences of the current keyword and the keyword present in the topical keyword storage unit 15 (step S16). That is, the topical keyword-structure generating unit 14 determines whether a keyword already exists or is newly formed by referring to the keywords stored in the topical keyword storage unit 15 and appends an attribute ("New" flag) to new keywords not yet stored in the topical keyword storage unit 15.

The process of checking for new keywords and calculating the difference in the current and previous frequencies of occurrence of the keywords (steps S14 to S16) is repeated until no more keywords are left unchecked (No at step s17).

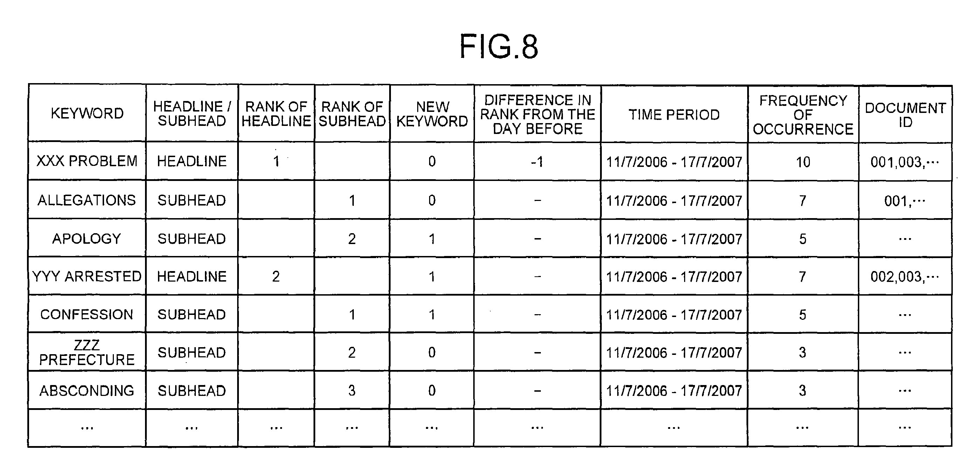

Fig. 8 depicts a keyword structure obtained as a result of the process performed by the topical keyword-structure generating unit 14 as described above. In addition to the attributes such as the string, the time period, the frequency of occurrence, and the document ID that are appended to each topical keyword at the time of extraction, other attributes are appended to each topical keyword. The other attributes include whether a keyword is a headline keyword or a subhead keyword, what rank each headline keyword and subhead keyword has, whether a keyword has the "New" flag, and what difference is in the rank of a keyword as compared to the day before. The attribute indicating the difference in the rank of a keyword is appended only to the headline keywords with the "New" flag off ("0" for the "New" flag), that is, only to the headline keywords that are present from the day before and already have a certain rank, which can be compared with the latest rank. If a subhead keyword on the day before is promoted to a headline keyword the next day, the newly formed headline keyword is appended with the "New" flag on ("1" for the new flag). It is also possible to add an attribute to the keyword structure to indicate whether a keyword is promoted from a subhead keyword to a headline keyword.

In this way, the topical keyword-structure generating unit 14 appends attributes to a keyword by comparing the previously calculated score (such as the frequency of occurrence) of the keyword.

The search-query generating unit 16 generates a search query for each classified and stratified topical keyword and outputs the search query to a user. The condition for a search-query in case of a headline keyword is the string of the headline keyword, while the condition for a search-query in case of a subhead keyword is "AND" operation on the string of the subhead keyword and the string of the corresponding headline keyword. Such a search query enables a user to obtain results not only in a broad context of the headline keyword but also in a limited context of the subhead keywords. For example, with respect to a headline keyword "XXX problem" with a broad context, results for subhead keywords with a limited context such as "allegations" or "apology" can also be obtained. In this way, the search-query generating unit 16 generates a search query with multiple search keywords depending on the topical keyword structure generated by the topical keyword-structure generating unit 14. To obtain all possible search results, the condition of the search query can be set as "headline keyword AND (subhead keyword 1 OR subhead keyword 2 OR ... subhead keyword n)". To obtain a news article as a result of the search, a fixed search query for news such as "news" can be used. The search-query generating unit 16 can also use a predetermined keyword string to generate a search query.

The search-query generating unit 16 generates a webpage with embedded search queries based on the topical keywords and the topical keyword structure generated by the topical keyword-structure generating unit 14. The generated webpage is output to the client 3. A user can browse the webpage on the client 3 using a web browser.

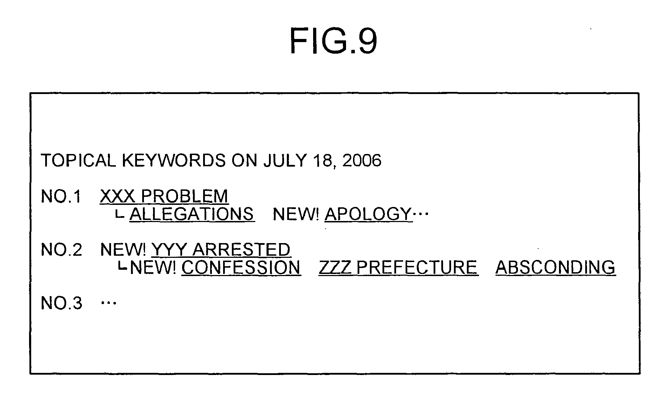

Fig. 9 is a schematic diagram of an example of displaying the topical keywords. The headline keywords are displayed in order of rank of the score shown in Fig. 8. The subhead keywords are displayed in a hierarchical manner with respect to the corresponding headline keyword and also according to the order of rank of the score shown in Fig. 8. The order of rank of the score changes with time in a specific time period. Such change in the order of rank in a specific time period indicates, for example, the current status of a topic corresponding to a headline. In addition, newly displayed topics can be emphasized by using characters or icons (for example, "New!" in Fig. 9). The topical keyword outputting unit 17 also displays various marks such as icons, symbols, or display effects based on the status and types of attributes. Each mark is identifiable with a particular attribute.

Each displayed topical keyword is an anchor text and is linked to a web-based search site by a hyperlink. When a user clicks on a topical keyword, the webpage jumps to a list of search results on a web-based search site corresponding to the search query generated for the clicked topical keyword. In other words, each topical keyword itself functions as a search query to a web-based search site. As a result, a user is able to easily access all topical news without any need to type keywords from a keyboard, thus saving efforts of typing and searching various combinations of keywords manually.

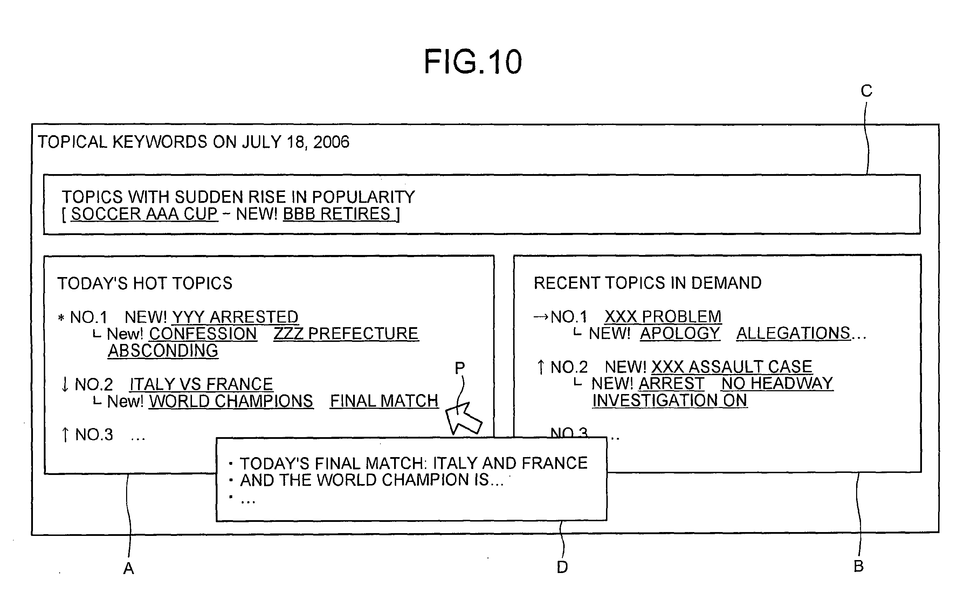

Fig. 10 is a schematic diagram of another example of displaying the topical keywords. The topical keywords are extracted from two types of documents. One is a set of documents for a short period of time and the other is a set of documents for a long period of time. A set of topics associated with the documents for a short period of time are displayed in an "A section" allotted for "Today's hot topics". The rest of the topics associated with the documents for a long period of time are displayed in a "B section" allotted for "Recent topics in demand". Thus, the topical keywords are displayed depending on the time period set for each document from which the topical keywords are extracted.

Icons and arrow marks are displayed alongside the topical keywords to indicate any change in the rank of the displayed topical keywords, that is, to indicate change in popularity or current status of the displayed topical keywords. For example, a newly displayed topical keyword is displayed with an asterisk sign.

Moreover, the topical keywords with a sudden rise in the frequency of occurrence are displayed in a separate "C section" allotted for "Topics with sudden rise in popularity" irrespective of the rank of those topical keywords.

The subhead keywords are displayed not only according to their rank but also according to the status of their "New" flag. That is, the subhead keywords with the "New" flag on are displayed by priority to provide a display with high topicality at any given time. In this way, the topical keyword outputting unit 17 changes the order of display of the keywords based on the status and types of attributes.

At times, there can be keywords that are difficult to comprehend without any explanation of their meaning. However, in the example shown in Fig. 10, there is no need to open a separate web-based search site to obtain detailed information about a topical keyword. The detailed information, that is, information of the original document, from which the topical keyword is extracted, is displayed just by placing the mouse pointer over the topical keyword. In other words, when the mouse pointer is placed over a topical keyword, the topical keyword outputting unit 17 displays information of the original document that includes the respective topical keyword. For example, in Fig. 10, when a mouse pointer "P" is placed on a topical keyword "Final match", the topical keyword outputting unit 17 displays information of the original document that includes the topical keyword "Final match". Hence, it is easy to understand in what context the topical keyword "Final match" is used.

In this way, the keyword analyzing unit analyzes keywords from documents received in a specific time period. The keyword extracting unit calculates a score for each analyzed keyword and extracts the keywords in order of the score. The keyword-structure generating unit classifies and stratifies the extracted keywords to generate a keyword structure. The keyword outputting unit outputs the classified and stratified keywords in descending order of the score based on the keyword structure. Thus, it is possible to efficiently detect and output from the documents with a date-time attribute the topical keywords related to a topic at a specific date and time. Besides, because each topical keyword is classified and stratified, and also displayed in order of the score, it is possible to keep a follow-up of the topics in a specific time period by referring to the order of the topical keywords, which are arranged in a hierarchical manner with respect to a particular topical keyword. Such display enables the user to understand the current situation or progress about a particular topic. More particularly, the user can easily understand the current situation and the progress about a particular topic just by checking recent topics in demand, because any new development regarding a topic is displayed in the form of hierarchical keywords.

According to the present embodiment, it is possible to record information of a document such as daily lineup of TV shows, determine the criteria by which the keywords are extracted from the document, calculate the frequency of occurrence or newness of the keywords, and generate the necessary headline information associated with the topical keywords. Thus, it is easy to detect the talked-about current topical keywords and the time period of topics for which the corresponding topical keywords are displayed.

Moreover, by referring to the keyword structure for the past results of the keywords, it is possible to specify newly formed keywords, change in the frequency of occurrence of the already existing keywords, and change in the rank of keywords. The display contents are updated depending on such information to enable a user to know the situation of a particular topical headline or the set of keywords including the latest keywords associated with a particular topic.

It has been explained above that the topical keyword outputting unit 17 outputs the topical keywords "after" the search-query generating unit 16 appends a search query to each topical keyword. However, various other approaches are possible. For example, the topical keyword outputting unit 17 can be configured to output the topical keywords first and the search-query generating unit 16 can be configured to append a search query to each topical keyword selected by a user.

Moreover, it has been explained above that the topical keyword outputting unit 17 outputs a webpage generated by the search-query generating unit 16 upon receiving requests to display the webpage from the client 3 through the network 2. However, various other approaches are possible. For example, the webpage can be downloaded in advance on the client 3 and displayed to the user as a local file.

Furthermore, it has been explained above that the server 1, which functions as the keyword outputting apparatus, is connected to a plurality of the clients 3 through the network 2. However, various other approaches are possible. For example, there can be only one client. Moreover, the keyword outputting apparatus can be a standalone computer.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A keyword outputting apparatus comprising:
a document receiving unit (11) configured to receive a document having a date-time attribute that is in a specific time period;
a keyword extracting unit (13) that analyzes the documents and extracts topical keywords from the document;
a ranking determining unit (12) that determines a ranking of each of the keywords based on attributes on these keywords;
a keyword-structure generating unit (14) that generates a keyword structure by classifying and stratifying the keywords based on cooccurrence of keywords; and
a keyword outputting unit (17) that outputs the keywords in descending order of the ranking that is determined by the ranking determining unit (12).

2. The keyword outputting apparatus according to claim 1, further comprising a search-query generating unit (16) that appends a search query to each of the keywords before the keyword outputting unit (17) outputs the keywords.

3. The keyword outputting apparatus according to claim 1, further comprising a search-query generating unit (16) that appends a search query to each of the keywords that is selected by a user.

4. The keyword outputting apparatus according to claim 2, wherein the search-query generating unit (16) generates the search query by combining a plurality of keywords based on the keyword structure.

5. The keyword outputting apparatus according to claim 2, wherein the search-query generating unit (16) appends a predetermined keyword string as the search query.

6. The keyword outputting apparatus according to claim 1, further comprising a storage unit (15) that stores therein the keywords with a corresponding ranking and the keyword structure, wherein
the ranking determining unit (12) and the keyword-structure generating unit (14) refer to the keywords and the keyword structure in the storage unit (15).

7. The keyword outputting apparatus according to claim 6, wherein
the storage unit (15) further stores therein a keyword history associated with each of the keywords, and the ranking determining unit (12) determines the ranking based on the keyword history.

8. The keyword outputting apparatus according to claim 6, wherein the keyword-structure generating unit (14) appends a specific attribute to each of the keywords stored in the storage unit (15) by comparing a current ranking and the ranking determined previously corresponding to each keyword.

9. The keyword outputting apparatus according to claim 6, wherein the keyword-structure generating unit (14) determines whether a keyword is a newly formed keyword by comparing with the keywords stored in the storage unit (15), and when it is determined that the keyword is a newly formed keyword, appends a new flag to the newly formed keyword.

10. The keyword outputting apparatus according to claim 1, wherein the document receiving unit (11) receives documents in at least one of specified time periods.

11. The keyword outputting apparatus according to claim 1, wherein the ranking determining unit (12) determines the ranking of each of the keywords by using a specific attribute of the keywords.

12. The keyword outputting apparatus according to claim 11, wherein the specific attribute of the keywords is frequency of occurrence of the keywords.

13. The keyword outputting apparatus according to claim 11, wherein the specific attribute of the keywords includes information on whether a keyword is extracted for first time.

14. The keyword outputting apparatus according to claim 1, wherein the keyword-structure generating unit (14) classifies and stratifies the keywords based on co-occurrence of the keywords that is caused by commonality in the documents to which the keywords belong.

15. The keyword outputting apparatus according to claim 1, wherein the ranking determining unit (12) extracts the keywords by using inclusion relation of each of the keywords.

16. The keyword outputting apparatus according to claim 1, wherein the keyword outputting unit (17) outputs in response to a predetermined operation the documents that include the keywords.

17. The keyword outputting apparatus according to claim 8 or 9, wherein the keyword outputting unit (17) displays a mark identifiable with the specific attribute based on status and type of the specific attribute.

18. The keyword outputting apparatus according to claim 8 or 9, wherein the keyword outputting unit (17) changes order in which the keywords are displayed based on status and type of the specific attribute.

19. A method of outputting keywords comprising:
receiving a document having a date-time attribute that is in a specific time period;
analyzing the document and extracting topical keywords from the document;
determining a ranking of each of the keywords based on attributes on these keywords;
generating a keyword structure by classifying and stratifying the keywords based on cooccurrence of keywords; and
outputting the keywords in descending order of the ranking.

20. A computer program product including a computer-readable recording medium that stores therein a plurality of commands that cause a computer to implement a method of outputting keywords, the commands causing the computer to execute:
receiving a document having a date-time attribute that is in a specific time period;
analyzing the document and extracting topical keywords from the document;
determining a ranking of each of the keywords based on attributes on these keywords;
generating a keyword structure by classifying and stratifying the keywords based on cooccurrence of keywords; and
outputting the keywords in descending order of the ranking.
